# EUROPÄISCHE PATENTSCHRIFT

(11) **EP 2 043 107 B1**
(45) Veröffentlichungstag und Bekanntmachung des Hinweises auf die Patenterteilung: **01.09.2010**
(21) Anmeldenummer: 08016848.7
(22) Anmeldetag: 25.09.2008
(51) Int. Cl.: G21F 9/00, G21F 7/005, B60P 3/00, B08B 3/00

(54) **Schleuse insbesondere für die Dekontamination von Personen beziehungsweise Gegenständen**
Sluice, in particular for decontaminating people or objects
Ecluse, en particulier pour la décontamination de personnes ou d'objets

(30) Priorität: 25.09.2007 DE 102007045771
(43) Veröffentlichungstag der Anmeldung: 01.04.2009
(73) Patentinhaber: Rheinmetall Landsysteme GmbH, 24107 Kiel (DE)
(72) Erfinder: Gerlach, Klaus-Peter, 34302 Guxhagen (DE); Schmidt, Dieter, 34277 Fuldabrück (DE); Stulgies, Baldur, 34359 Reinhardshagen (DE); Heinrich, Jürgen, 34225 Baunatal (DE); Günther, Normann, 34132 Kassel (DE); Födisch, Johann, 34125 Kassel (DE)
(74) Vertreter: Dietrich, Barbara

(56) Entgegenhaltungen:
- DE-A1- 2 141 953
- DE-A1- 3 718 470
- FR-A- 1 416 840
- FR-A- 2 499 126
- RU-C1- 2 134 761
- US-B1- 6 779 567

## Beschreibung

Die Erfindung betrifft vorrangig eine mobile Personenschleuse für insbesondere ABC-Nachweisfahrzeuge.

Aus der DE 103 45 351 A1 ist ein mobiles Dekontaminationssystem zum Dekontaminieren von Personen und Gegenständen bekannt, bestehend aus einem ersten und einem weiteren Dekontaminationsmodul, die jewells Einrichtungen zum Dekontaminieren von Personen bzw. Gegenständen aufweisen. Die Module sind transportable Container. Beide sind autark arbeitsfähig.

Aus der RU-C1-2 134 761 ist ein Schleusenmodul für Arbeitsmodule aus einer aufblasbaren Schleusenkammer mit Seitenwänden, Bodensegment und Dach bekannt.

Ein weiteres transportables System zur Dekontamination von Personen sowie Gegenständen wird mit der DE 198 21 042 A1 beschrieben. Dieses umfasst gleichfalls Containermodule für die Frischwasserversorgung, Abwasserentsorgung, Kraftstoffversorgung und Stromversorgung, Weitere Container weisen separate Anlagen zur Dekontamination von Personen und Geräten auf.

Auch die DE 34 32 282 A1 beschäftigt sich mit einem mobilen Dekontaminationssystem, Ein Transportfahrzeug dient zum Transport eines Containers, der ein Kleiderdekontaminationssystem enthält. Mittels Anhänger kann des Weiteren eine Personendekontaminationseinrichtung transportiert werden. Für die zusätzliche Nutzung des Fahrzeuges ist dieses mit einem faltbaren oder elastischen Tank ausgerüstet.

Ein Laboratorium für ortsveränderlichen Einsatz zur Durchführung von Messungen und Untersuchungen insbesondere auf dem Gebiet des Schutzes gegen ionisierende Strahlung publiziert die DD 82 510.

Eine Vorrichtung zur Schnelldekontamination von Personen im Zivil- und Katastrophenschutz wird in der DE 198 14 740 A1 bzw. DE 298 24 860 U1 offenbart. Die Vorrichtung umfasst einen Frischwassertank, einen Abwassertank sowie diverse andere Baugruppen, die auf der Ladefläche bzw. einer Palette auf der Ladefläche eines Fahrzeuges transportiert werden.

Nachteilig bei diesen bekannten Systemen ist der hohe konstruktive bzw, bauliche Aufwand.

Bei ABC-Nachweisfahrzeugen darf zudem die geschützte Mannschaft das Fahrzeug erst verlassen, nachdem dieses auf einem Dekontaminationsplatz vollständig dekontaminiert wurde.

Die Erfindung stellt sich die Aufgabe, ein mobiles Dekontaminierungssystem aufzuzeigen, das neben einem einfachen konstruktiven Aufbau nur einen geringen Bauraum einnimmt.

Gelöst wird die Aufgabe durch die Merkmale des Patentanspruchs 1. Vorteilhafte Ausführungen sind den Unteransprüchen entnehmbar.

ABC-Nachweisfahrzeuge oder derartige Container sind in der Regel mit einer ABC-Schutzanlage ausgerüstet oder können mit dieser nachgerüstet werden, die für die Besatzung gefilterte Luft mit einem geringen Überdruck zum Außenbereich bereit stelit, so dass beim Einsatz dieser Fahrzeuge / Container in einem kontaminierten Gebiet aufgrund des Druckgefälles keine Kontaminationsverschleppung von außen in den Innenraum erfolgen kann.

Diese Überlegungen weiterführend, liegt der Erfindung die Idee zugrunde, eine Art aufblasbare bzw. sich entfaltende Schleuse an einem Objektzugang, wie beispielsweise einer Tür, durch welche Personen gehen oder Gegenstände / Geräte geführt werden, anzubringen. Des Weiteren wird eine objektelgene oder nachrüstbare ABC-Schutzanlage dazu genutzt, diese Schleuse als Dekontaminationsschleuse arbeiten zu lassen.

Im Schleusenbetrieb ist vorgesehen, dass sich die Schleuse vorzugsweise automatisch aufbaut. Die Struktur wird vom inneren des Objektes mit Druckluft befüllt und kann sich dadurch selbstständig entfalten. Die Schleuse wird durch eine aufblasbare Schleusenkammer gebildet, die zumindest aus einem Bodensegment, Seitentellen und einem Dach sowie einer Außentür. Zur Bildung einer festeren Struktur bzw. Schleuse sind entfaltbare Stützen als Tragestruktur vorgesehen, an den die Schleusenkammer angebracht bzw. angehängt ist. Die Stützen können mittels Luft, Wasser etc. befüllt werden, wobei Luft bevorzugt wird.

Die Schleuse wird mit definiertem Luftdurchlass aus dem Objekt oder Fahrzeug heraus mit gefilterte Luft aus der ABC-Schutzbelüftungsanlage versorgt und entfaltet sich. Das Belüftungssystem erzeugt eine abgestufte Belüftungskaskade vom Objekt / Fahrzeug über das Schleuseneingangssystem bis zur Umgebung hin. Die aus einem Überdruckventil des Objektes / Fahrzeuges abströmende Luft wird in das Schleusenzelt bzw, die Schleusenkammer geleitet. Dabel werden alle Türen und Öffnungen geschlossen gehalten, bis der erforderliche Druck aufgebaut ist. Um den Volumenstrom der ABC-Schutzbelüftungsanlage zum Spülen des Schleusenzeltes innerhalb kürzester Zeit nutzen zu können, wird bei Personentransfer das Glove-Box-Verbundsystem vorzugsweise in einen Save-mode gefahren. Das mit ABC-gefilterter Luft gefüllte Schleuseneingangssystem ist zum Ausschleusen bereit. Die Druckkaskaden bzw. das Druckgefälle zwischen Objekt, Schleuse und Außen ermöglicht so die Schleusung von Material sowie Personen.

Ist ein Höhenunterschied zwischen dem Objektzugang und dem Bodenniveau vorhanden, beispielsweise bei einem Objekt mit höher angebrachtem Zugang, so wird dieser mit der Schleuse ausgeglichen. Trittleiter oder dergleichen unterstützen hier ein Ein- bzw. Aussteigen.

Die aufgebaute Schleuse bietet Platz zum Aufschwenken beispielsweise einer Zugangtür zum Objekt / Fahrzeug und für das Ablegen sowie Verstauen zumindest des Schutzanzuges einer Person.

Das Bodensegment der Schleuse ist bevorzugt aus rutschfestem Material und sollte im Bereich erhöhter Beanspruchungen verstärkt sein. Das Bodensegment dient zudem zum Auffangen einer Dekontaminationsflüssigkeit. Diese wird nach Beendigung des Reinigungsvorganges mit einem Schlauch oder dergleichen vom Benutzer aufgefangen bzw. aufgesaugt.

Zum Verlassen und Betreten der Schleuse dient die Außentür. Diese muss wie die gesamte Schleuse luftdicht geschlossen werden können. Zum Ausschleusen gelangt man durch Öffnen des Objektzuganges (beispielsweise einer Tür, eines Fensters etc.) in die Schleuse. Nach dem Schließen des Zuganges kann die Schleuse durch die schleuseneigene Außentür verlassen werden. Für das Einschleusen wird die schleusensigene Außentür geöffnet und danach ordnungsgemäß verschlossen. Die Person / der Gegenstand werden dekontaminiert. Nachdem Person und Ausrüstung gereinigt sind, kann der Zugang wieder geöffnet werden. Diese Zeit muss so lange sein, dass die Luft in der Schleusenkammer komplett mit frischer Luft aus dem Objektraum ausgetauscht ist.

Das Material der Schleuse ist ein ABC-resistentes Material, dass sich selbst leicht dekontaminieren lässt.

Auf dem Rückweg dekontaminiert sich die mit einem ABC-Vollschutz ausgerüstet Person in dieser Schleusenkabine mit geeigneten Dekontaminationsmittel und bereitet sich für den Wiedereintritt in den sauberen Objektraum vor. Ein Behälter am Objekt bevorratet das Dekontaminationsmittel in einer ausreichenden Menge. Benutztes Dekontaminationsmittel kann aus der Schleuse abgepumpt und einer fachgerechten Entsorgung zugeführt werden. Insbesondere bei mobilen Objekten wird sichergestellt, dass die Menge an Dekontaminationsmitteln für mehrere Durchgänge ausreichend ist.

Nach Beendigung des Schlausenbetriebs, wenn sich der Bediener wieder im Inneren des Objektes befindet, kann die Schleuse zusammengefaltet werden. Das Falten kann mit bekannten mechanischen Mitteln, beispielsweise schleusenseitig angebrachte Gummlzüge, passiv erfolgen. Bevorzugt wird jedoch eine einfache aktive Variante. Dabei kann das Nachströmen der Luft durch ein bevorzugt objekteigenes Überdruckventil gestoppt und sowohl die Tragestruktur als auch der Innenraum der Schleuse aktiv entlüftet werden.

Bei Anwendung an einem mobilen Objekt, wie beispielsweise einem Fahrzeug und um die Mobilität der Fahrzeuge nicht einzuschränken, wird die Schleuse nach jedem Gebrauch zusammengefaltet. Prinzipiell sollte die Schleuse, welche luftdicht an das Fahrzeugheck integriert wird, nur bei Bedarf auf lhr eigentliches Nutzvolumen in kürzester Zeit expandiert werden. Die Schleuse an einem ABC-Nachweisfahrzeug nutzt als Barriereeinheit zum Mehrzweckaufbau des Fahrzeugs vorrangig eine vorhandene Tür im Heckbereich. Für die Weiterfahrt des Fahrzeuges ist ein einfaches Zusammenfalten des Zeites mit Hilfe von einfachen mechanischen Faltmitteln oder das Entziehen der Luft aus dem Zeit angedacht, so dass die Schleuse am Heck des Fahrzeuges anliegt, eine weitere Nutzung jedoch möglich bleibt. Auch schleusenseitig angebrachte Gummizüge können die Schleuse in diese so genannte Fahrstellung bringen. Wird ein selbstständiges Zusammenfalten angestrebt, so hat sich auch hier als vorteilhafte Variante gezeigt, dass Nachströmen der Luft durch ein vorzugsweise fahrzeugelgenes Überdruckventil zu stoppen und auch hier die Tragstruktur als auch den Innenraum der Schleuse aktiv zu entlüften.

Die Schleuse ermöglicht somit, dass die Besatzung in kontaminiertem. Gelände sowohl im Fahrzeug (Objekt) arbeitien kann und auch unter Schutzbekleidung außen operieren kann. Die Schleuse gewährt ein gefährdungsfreies Aus- und wieder Einsteigen.

Der Einsatz einer solchen Schleuse ist auch bei stationären Objekten möglich, da die Schleuse selbst in jedem Fall transportabel und an Jeder Tür oder einem anderen Zugang, wie beispielsweise einem Fenster, nachrüstbar ist.

Anhand zweier Ausführungsbeispiele mit Zeichnungen soll die Erfindung näher erläutert werden. Es zeigt:
- Fig. 1: eine erste Ausführung der Schleuse im funktionsgemäßen Zustand,
- Fig. 2: eine weitere Ausführung der Schleuse im funktionsgemäßen Zustand,
- Fig. 3: eine Darstellung der Anbindung der Schleuse aus Fig. 3 an einen höher gelegenen Ausstieg,
- Fig. 4: die Schleusen aus Fig. 1 oder Fig. 2 im Einbauzustand,
- Fig. 5: die Schleuse beispielsweise aus Fig. 4.

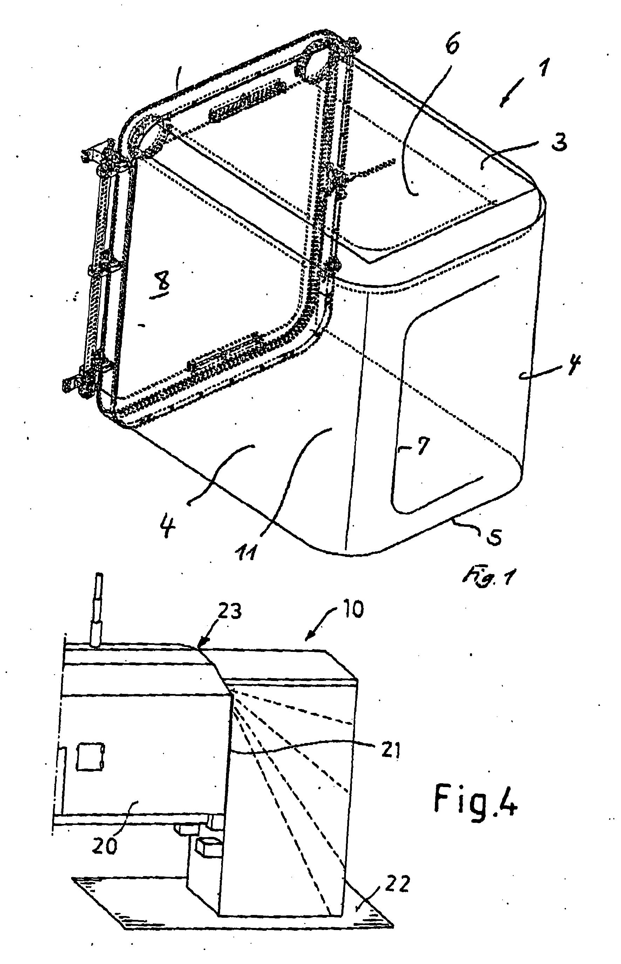

Fig. 1 zeigt eine erste Ausführung für eine zusammenfaltbare Schleuse 1, 10, Die Schleuse 1, 10 besteht aus aufblasbaren Druckluftstützen 3 als Tragestruktur der Schleuse 1, 10, Seitenwänden 4, einem Bodensegment 5 und einem Dach 6, die eine Schleusenkammer 11 bilden. Eine der Seitenwände 4 besitzt eine luftdicht verschließbare Außentür 7, eine weitere bevorzugt ein Fenster. Die Stützen 3 sind mit ein Gebläse (nicht näher dargestellt) oder einem anderen, die Stützen 3 zum Entfalten bringenden Aggregat funktional verbunden.

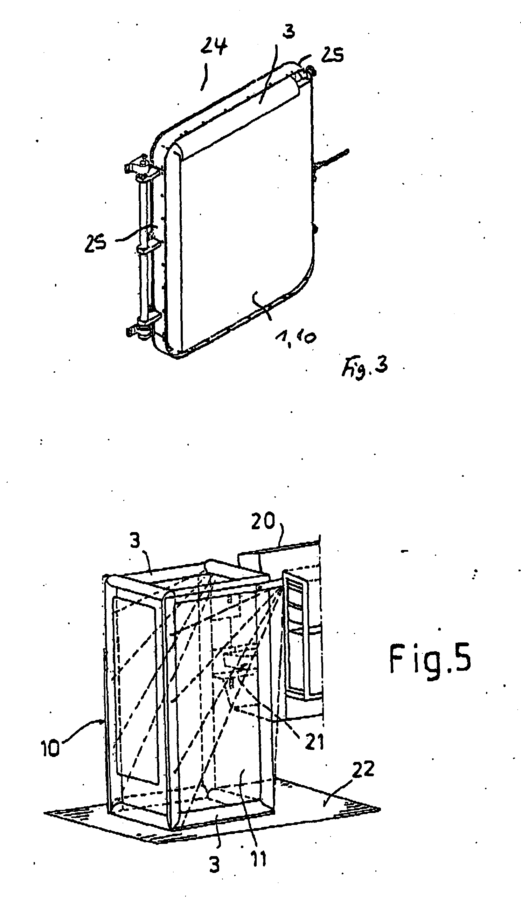

Die Schleuse 1 kann an einem zu ebener Erde liegenden Ausgang / Zugang etc. angebracht werden, beispielsweise an einen Container (nicht näher dargestellt) mit einer darin integrierten Zugengstür (8). Die Stützen 3 sind beispielsweise mit Luft befüllt worden und haben sich dadurch in die Funktionsstellung gebracht. Die Seitenwände 4 der Schleuse 1 wurden aus dem eingefalteten Zustand (Fig. 3) in eine entfaltete Position geführt.

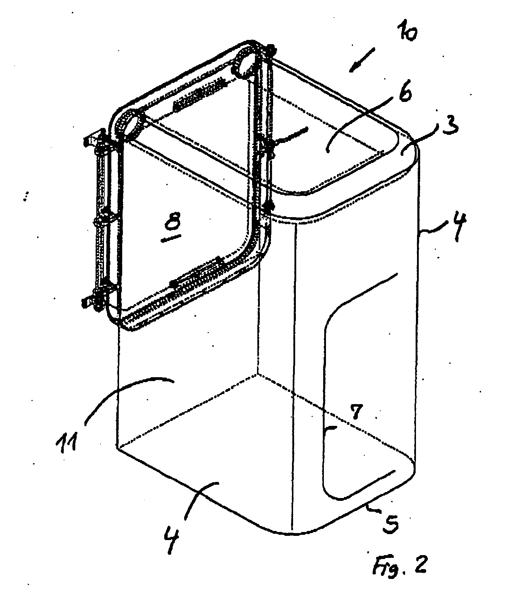

In Fig. 2 ist eine weitere Variante für die Schleuse 10 aufgezeigt, welche hier an einem höher gelegenen Ein- bzw. Ausstieg anbringbar ist. Dies kann beispielsweise der Heckausstieg 21 eines Fahrzeuges 20 (Fig. 4) sein. Die Schleuse 10 unterscheidet sich von der Schleuse 1 nach Fig. 2 dadurch, dass sie größer ist, um den Höhenunterschied zwischen Hecktür 21 und dem Bodenniveau 22 zu reichen.

Die Fig. 3 zeigt die zusammengefaltete Schleuse 1, 10 in ihrer ursprünglichen Faltung.

Fig. 4 zeigt die Anbringung der Schleuse 10 an einem Fahrzeug 20 an einer Hecktür 21. Ein Drehstab unterstützter schwenkbarer Rahmen 24 mit seitlichen Schutzwänden 25 ist vorzugsweise mit einer fahrzeugseitigen Verriegelung gegen eine umlaufende Dichtung auf der Heckwand 23 gezogen und bildet den ABC-dichten Übergang vom Fahrzeug 20 zur Schleuse 10. Im normalen Fahrbetrieb befindet sich die Schleuse 10 zusammengefaltet am Rahmen zwischen den Schutzwänden 25 unter der leicht lösbaren Abdeckung: Mit Öffnen der Hecktur 21 wird der Zugang zur Schleuse 1, 10 gewährleistet.

Vor dem Erstgebrauch ist die Schleuse 1, 10 hinter einer Abdeckung (nicht näher dargestellt) untergebracht und an einem Ausgang / Zugang eines Objektes, wie Fahrzeug, Gebäude etc. angebracht. Für den Gebrauch der Schleuse 1, 10 werden die Stützen 3 der Schleuse 1, 10 aus dem Objekt / Fahrzeug 20 heraus mit Druckluft befüllt und entfaltet sich selbstständig, nehmen dabei die zur Schleuse 1, 10 gehörenden Seitenwände 4, das Bodensegment 5 sowie das Dach 6 mit. Die sich dadurch bildende Schleusenkammer (-struktur) wird durch ein Ventil oder dergleichen mit definiertem Luftdurchlass aus dem Objekt / Fahrzeug 20 heraus mit gefilterter Luft aus einer ABC-Schutzbelüftungsanlage (nicht näher dargestellt) versorgt. Das Belüftungssystem erzeugt eine abgestufte Belüftungskaskade vom Objekt über das Schleuseneingangssystem bis zur Umgebung hin. Die beispielsweise aus einem Überdruckventil abströmende Luft wird in das Schleusenzeit bzw. die -kammer 11 geleitet. Dabei werden alle Türen und Öffnungen geschlossen gehalten, bis der erforderliche Druck aufgebaut Ist.

Der Ausstieg aus der Schleusenkammer 11 in die Umgebung erfolgt durch die Tür 7 in der Schleuse 1, 10.

Diverse Dekontaminationseinrichtungen oder -mittel, beispielsweise eine Dusche und Wasser, können aus dem Objekt / Fahrzeug 20 heraus bereitgestellt werden.

Die Dekontaminationsmittel werden vom Bodensegment 5 im Zusammenspiel mit den Seitenwänden 4 aufgefangen, sind von dort absaugbar und werden später vorschriftsmäßig entsorgt.

Nach funktionalem Gebrauch kann die Schleuse 1, 10 wieder zusammengefaltet werden.

Eine weitere Variante der Schleuse ist noch in Fig. 5 dargestellt. Die Schleuse 1, 10 weist weitere Stützen, Längs- und Querstützen, auf, wodurch die Tragestruktur der Schleusenkammer 11 wesentlich erhöht werden kann.

## Patentansprüche

1. Schleuse (1) Insbesondere für die Dekontamination von Personen bzw. Gegenständen, **gekennzeichnet durch**:
- eine Anbindbarkeit an einen Zugang (8, 21) zu einem mobilen oder stationären Objekt (20),
- bestehend aus einer aufblasbaren Schleusenkammer (11), mit Seitenwänden (4), einem Bodensegment (5) sowie einem Dach (6),
- welche Im gefalteten Zustand am Objekt (20) anbringbar und auch mitführbar ist und
- zumindest eine,der vom Objekt (20) abgewandten Seitenwand (4) eine Außentür (7) zur Umgebung aufweist.

2. Schleuse nach Anspruch 1, **dadurch gekennzeichnet, dass** sich entfaltende Stützen (3) als Tragestruktur für eine bessere Strukturbildung der Schleusenkammer (11) vorgesehen sind.

3. Schleuse nach einem der Ansprüche 1 bis 2, **dadurch gekennzeichnet, dass** wenigstens eine der vom Objekt (20) abgewandten Seitenwand (4) ein Fenster aufweist.

4. Schleuse nach einem der Ansprüche 1 bis 3, **dadurch gekennzeichnet, dass** das Bodensegment (5) aus einem rutschfesten Material und wie die Seltenwände (4) aus ABC-resistenten Materialien besteht.

5. Schleuse nach einem der Ansprüche 1 bis 4, **dadurch gekennzeichnet, dass** diese durch Befüllen der Schleusenkammer (11) mit ABC-gefilterter Luft entfaltet wird.

6. Schleuse nach Anspruch 2, **dadurch gekennzeichnet, dass** die Stützen (3) mittels eines einbringbaren Mittels, wie beispielsweise Luft, entfaltet werden.

7. Schleuse nach einem der Ansprüche 1 bis 6, **dadurch gekennzeichnet, dass** ein Höhenunterschied zwischen dem Zugang (8, 21) und Bodenniveau durch die Schleuse (1, 10) ausgeglichen wird, wozu verlängerte, auf den Boden reichende Seitenwände (4) In der Schleusenstruktur (11) eingebunden werden.

8. Schleuse nach einem der Ansprüche 1 bis 7, **dadurch gekennzeichnet, dass** ein Zusammenfalten nach funktionalem Gebrauch vorgesehen ist.

9. Schleuse nach Anspruch 8, **dadurch gekennzeichnet, dass** das Zusammenfalten passiv und / oder aktiv erfolgen kann.

10. Schleuse nach Anspruch 9, **dadurch gekennzeichnet, dass** zum passiven Zusammenfalten mechanische Faltmittel und / oder schleusenseitig angebrachte Gummizüge vorgesehen sind.

11. Schleuse nach Ansprüche 9, **dadurch gekennzeichnet, dass** zum aktiven Zusammenfalten der Tragstruktur der Schleusenkammer (11) das die Tragstruktur aufstellende Mittel entzogen wird.

## Claims

1. Sluice (1), in particular for the decontamination of persons or objects, **characterized by**:
- a capability of being tied up to an access (8, 21) to a mobile or stationary article (20),
- consisting of an inflatable sluice chamber (11) with side walls (4), with a ground segment (5) and with a roof (6),
- which sluice, in the folded state, can be attached to the article (20) and can also be carried along with it, and
- at least one of the side walls (4) facing away from the article (20) has an outer door (7) to the surroundings.

2. Sluice according to Claim 1, **characterized in that** unfolding supports (3) are provided as a carrying structure for a better structural formation of the sluice chamber (11).

3. Sluice according to either one of Claims 1 to 2, **characterized in that** at least one of the side walls (4) facing away from the article (20) has a window.

4. Sluice according to one of Claims 1 to 3, **characterized in that** the ground segment (5) consists of a non-slip material and, like the side walls (4), consists of ABC-resistant materials.

5. Sluice according to one of Claims 1 to 4, **characterized in that** it is unfolded by the sluice chamber (11) being filled with ABC-filtered air.

6. Sluice according to Claim 2, **characterized in that** the supports (3) are unfolded by means of a medium capable of being introduced, such as, for example, air.

7. Sluice according to one of Claims 1 to 6, **characterized in that** a height difference between the access (8, 21) and ground level is compensated by means of the sluice (1, 10), for which purpose extended side walls (4) reaching to the ground are incorporated in the sluice structure (11).

8. Sluice according to one of Claims 1 to 7, **characterized in that** folding together after functional use is provided.

9. Sluice according to Claim 8, **characterized in that** folding together may take place passively and/or actively.

10. Sluice according to Claim 9, **characterized in that**, for the passive folding together, mechanical folding means and/or rubber pulls attached on the sluice side are provided.

11. Sluice according to Claim 9, **characterized in that**, for the active folding together of the carrying structure of the sluice chamber (11), the means setting up the carrying structure are extracted.

## Revendications

1. Sas (1), en particulier pour la décontamination de personnes ou d'objets, **caractérisé par**:
- une adaptabilité à un accès (8, 21) vers un objet mobile ou stationnaire (20),
- se composant d'une chambre de sas gonflable (11), avec des parois latérales (4), un segment de fond (5) ainsi qu'un toit (6),
- qui, à l'état replié, peut être placé sur l'objet (20) et emporté avec celui-ci, et
- au moins une paroi latérale (4) située à l'opposé de l'objet (20) présente une porte extérieure (7) vers l'environnement extérieur.

2. Sas selon la revendication 1, **caractérisé en ce qu'**il est prévu des supports dépliables (3) comme structure portante pour une meilleure formation de structure de la chambre de sas (11).

3. Sas selon l'une quelconque des revendications 1 à 2, **caractérisé en ce qu'**au moins une des parois latérales (4) situées à l'opposé de l'objet (20) présente une fenêtre.

4. Sas selon l'une quelconque des revendications 1 à 3, **caractérisé en ce que** le segment de fond (5) se compose d'un matériau antidérapant et, comme les parois latérales (4), d'un matériau résistant aux effets ABC.

5. Sas selon l'une quelconque des revendications 1 à 4, **caractérisé en ce qu'**il est déplié par gonflage de la chambre de sas (11) avec de l'air filtré ABC.

6. Sas selon la revendication 2, **caractérisé en ce que** les supports (3) sont dépliés par un moyen apte à y être introduit, par exemple de l'air.

7. Sas selon l'une quelconque des revendications 1 à 6, **caractérisé en ce qu'**une différence de hauteur entre l'accès (8, 21) et le niveau du sol est compensé par le sas (1, 10), des parois latérales (4) prolongées, atteignant le sol, étant à cet effet intégrées dans la structure du sas (11).

8. Sas selon l'une quelconque des revendications 1 à 7, **caractérisé en ce qu'**il est prévu un repliage après une utilisation fonctionnelle.

9. Sas selon la revendication 8, **caractérisé en ce que** le repliage peut être effectué de façon passive et/ou active.

10. Sas selon la revendication 9, **caractérisé en ce qu'**il est prévu des moyens de repliage mécaniques et/ou des poignées de traction en caoutchouc placées du côté du sas pour le repliage passif.

11. Sas selon la revendication 9, **caractérisé en ce que** le moyen dressant la structure portante est retiré de la chambre de sas (11) pour le repliage actif de la structure portante.
